Europäisches Patentamt

European Patent Office

Office européen des brevets

(11) Publication number: **0 287 716**
**A1**

# EUROPEAN PATENT APPLICATION

(21) Application number: **87200783.6**

(22) Date of filing: **24.04.87**

(51) Int. Cl.⁴: **H02G 15/18**

(43) Date of publication of application:
**26.10.88 Bulletin 88/43**

(84) Designated Contracting States:
**DE GB LU NL**

(71) Applicant: **Chemische Industrie Filoform B.V.**
**Verlengde Hoogravenseweg 69c**
**NL-3525 BB Utrecht(NL)**

(72) Inventor: **Baars, Jan**
**Th. Eisenstraat 28**
**Montfoort(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) A method of applying a sleeve around a cable joint, and synthetic plastics foil for performing this method.

㊲ A method of fitting a sleeve around a cable joint. A flexible synthetic plastics foil wrapper having a valve is fitted around the joints and subsequently thereabout a plastics tape of inextensible material is wound around the wrapper in a single layer of overlapping windings. The invention also comprises a plastics foil having a valve, the longitudinal edges of said foil being provided with an adhesive layer covered with a peel-off strip of aluminum foil.

FIG.2

EP 0 287 716 A1

# A method of applying a sleeve around a cable joint, and synthetic plastics foil for performing this method

This invention relates to a method of applying a sleeve around a cable joint, using a synthetic plastics wrapping, a valve and a synthetic resin.

In a similar method disclosed in Applicants' prior Dutch patent application 7903271, and the corresponding Belgian patent 882,902, respectively, the tape is applied in three layers, with incorporation of the valve, a 50% overlap being required to ensure an entirely sealed injection space for the synthetic plastics material.

A major drawback of this known method is the application of the synthetic plastics tape wrapping: this is not only time-consuming but moreover the chance of leakage persists.

It is an object of the present invention to remove these drawbacks.

To this effect, a method of the above described type is characterized by fitting around the joint a flexible synthetic plastics foil wrapper provided with the valve and subsequently winding a plastics tape of inextensible material around said wrapper in a single layer of overlapping windings.

It is thus possible to fit a sleeve of high quality quickly and in a simple manner.

The present invention further relates to a method of applying a removable sleeve around a cable joint, which comprises applying a collar to the outer sheath of the cable on either side of the joint, fitting a tube of non-conductive material over the two collars, subsequently fitting over said tube and the cable sheath portions adjoining said tube a synthetic plastics reinforcing mat and then a self-adhesive synthetic plastics wrapping incorporating a valve, and thereafter injecting a synthetic resin through said valve into the space between the plastics wrapping and the tube of non-conductive material, which method according to the present invention is characterized in that said wrapping comprises a wrapper of highly flexible synthetic plastics foil material incorporating said valve, and a plastics tape of inextensible material which is wound around said wrapper in a single layer of overlapping windings.

As a matter of interest it is observed that Swiss patent 362,729 discloses a method of fitting a sleeve around a cable joint, wherein around the joint there is first wrapped a porous insulating strip, subsequently thereabout a single synthetic plastics tape with overlap, with incorporation of an injection valve, and finally a synthetic plastics tape of inextensible material. In practice, the inner single tape wrapping has been found to exhibit leaks and, moreover, to require substantial time, mainly in connection with the incorporation of the valve. In the present invention, these problems have been solved in a simple and inexpensive manner.

The present invention further relates to a synthetic plastics foil for performing the method according to the present invention, including a valve, the longitudinal edges of said foil having an adhesive layer covered by an aluminum foil peel-off strip.

One embodiment of the method for fitting a removable sleeve according to the present invention will now be described, by way of example, with reference to the accompanying drawings, in which:

Fig. I is a perspective view showing the fitting of a synthetic plastics reinforcing sleeve;

Fig. 2 is a perspective view showing the fitting of a synthetic plastics foil with valve;

Fig. 3 is a cross-sectional view of the valve after the plastics foil has been fitted; and

Fig. 4 is a perspective view of the ready sleeve after a synthetic plastics tape has been fitted.

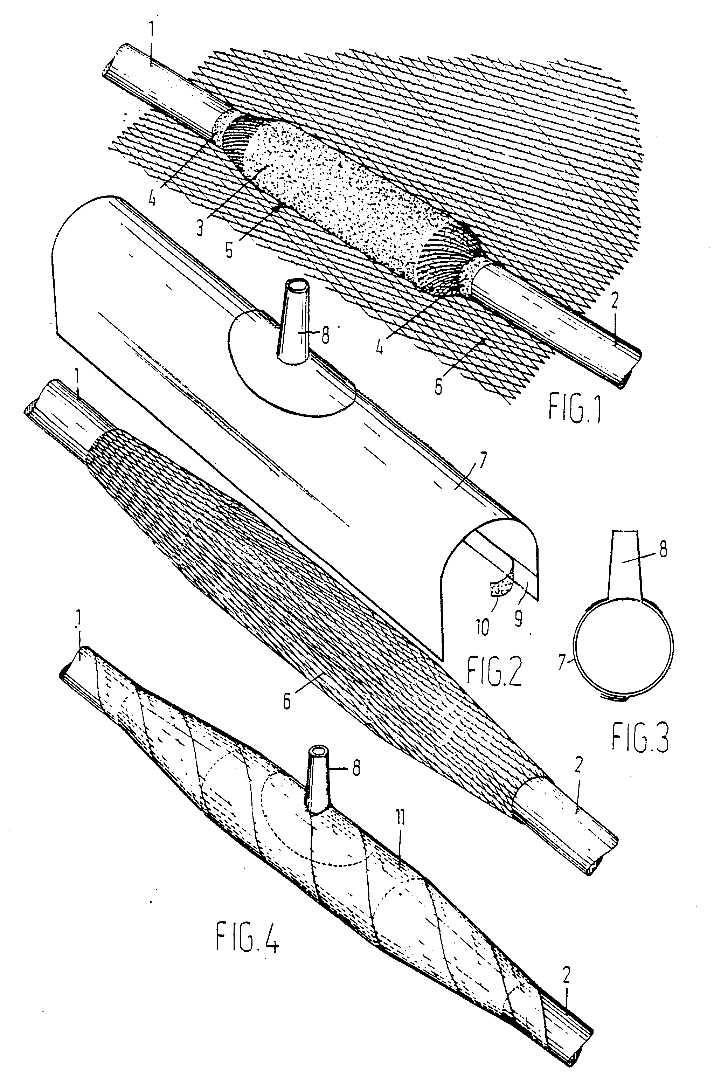

As shown in the drawings, use is made, in the fitting of a removable sleeve around a cable joint, of a strip of hard, flexible synthetic plastics foil, which is fitted at one end with an elastic foam plastic strip. A similar construction is described in the aforementioned Dutch application 7903271, and the corresponding Belgian patent 882,902 of Applicants, respectively, so that these elements will not be further discussed herein.

Fig. I shows cable sheaths I, 2, the conductors of which are interconnected in a manner not shown: these junctions or joints are covered by a synthetic plastics foil fitted with aluminum 3.

As an additional guarantee against the penetration into the space around the joints of the synthetic resin to be applied subsequently, there are provided collars of strip mastic 4 at the connections of the aluminum foil to the outer cable sheaths. Subsequently, a synthetic plastics reinforcing mat 6 is wrapped about a tube 5 thus formed.

For further details of the above described method, reference is made to the aforementioned publications.

Subsequently, there is wrapped about the reinforcing mat a foil wrapper 7 of flexible synthetic plastics material having a width slightly larger than the circumference of tube 5. The flexible plastics foil wrapper 7 is fitted with a valve 8 previously adhered thereto by means of adhesive. The inner longitudinal edges of the flexible plastics foil wrapper are provided with an adhesive layer 9 covered, prior to use, by an aluminum foil peel-off strip I0.

After fitting the plastics foil 7 around tube 5, the adhesive layers 9 are bounded together, whereafter the seam formed is folded down against the other party of the plastics foil 7.

After this, tape II is wound around wrapper 7 in a single layer of overlapping windings, the tape being of the inextensible type: by fitting the tape, the flexible foil wrapper 7 and the plastics reinforcing mat 6 are pressed as closely as possible against the sleeve 5 and the cable sheaths I, 2 so that the space to be filled with a bi-component resin becomes minimal: such a minimal space is possible on the one hand by using a flexible plastics foil and on the other hand by using a tape of the inextensible type.

Through the valve 8, which preferably takes the form of a non-return valve, there is injected a so-called "cold" hardening synthetic resin, e.g. polyurethane resin, consisting of two components, i.e. a liquid resin and a liquid hardening agent. However, it will be clear that all sorts of other synthetic resins are also possible.

Examples of suitable flexible synthetic plastics foil are PVC foil and polyester. An example of a tape of the inextensible type is polyester foil reinforced with polyamide filaments.

In the above described embodiment, the cable joint is enclosed in a synthetic plastics foil 3 so that a removable sleeve can be realized: however, it will be clear that the method according to the present invention as well as the flexible plastics foil used therein can also be employed when the space around the joint is directly filled by injection, i.e. when the joint is embedded entirely in synthetic resin.

## Claims

1. A method of fitting a sleeve around a cable joint, using a synthetic plastics tape wrapping, a valve and a synthetic resin, characterized by fitting around the joint a flexible plastics foil wrapper provided with the valve and subsequently winding a plastics tape of inextensible material around said wrapper in a single layer of overlapping windings.

2. A method of applying a removable sleeve around a cable joint, which comprises applying a collar to the outer sheath of the cable on either side of the joint, fitting a tube of non-conductive material over the two collars, subsequently fitting over said tube and the cable sheath portions adjoining said tube a synthetic plastics reinforcing mat and then a self-adhesive synthetic plastics wrapping incorporating a valve, and thereafter injecting a synthetic resin through said valve into the space between the plastics wrapping and the tube of non-conductive material, characterized in that said wrapping comprises a wrapper of highly flexible synthetic plastics foil material incorporating said valve, and a plastics tape of inextensible material which is wound around said wrapper in a single layer of overlapping windings.

3. A synthetic plastics foil for performing the method according to claim 1 or 2, provided with a valve, the longitudinal edges of said foil having an adhesive layer coated by an aluminum foil.

FIG.1

FIG.2

FIG.3

FIG.4

European Patent
Office

EUROPEAN SEARCH REPORT

Application Number

EP 87 20 0783

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 198 528 (FILOFORM) <br> * Column 2, lines 37-49; column 4, lines 32-37; figures 1,2 * | 1,2 | H 02 G 15/18 |
| Y,D | DE-A-3 015 369 (FILOFORM) <br> * Figures 3-5 * | 1,2 | |
| A | WO-A-8 600 178 (AMERICAN TELEPHONE & TELEGRAPH) <br> * Page 6, ligne 37 - page 7, ligne 32; figures 1-3 * | 1,2 | |
| A | DE-A-1 540 324 (RHEINISCHE DRAHT- UND KABELWERKE) <br> * Page 3, paragraph 2; figures 1,2 * | 1,2 | |
| A,D | CH-A- 362 729 (3M) <br> * Page 4, lines 21,22; figures 1-4 * | 1,2 | |
| A | FR-A-2 088 865 (3M) <br> * Page 5, lines 25,26; page 6, lines 5-8; figures 4,5 * | 1 | TECHNICAL FIELDS SEARCHED (Int. Cl.4) <br><br> H 02 G |

The present search report has been drawn up for all claims

| Place of search | Date of completion of the search | Examiner |
|---|---|---|
| THE HAGUE | 23-12-1987 | LOMMEL A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)